# EUROPÄISCHE PATENTSCHRIFT

(11) **EP 3 990 797 B1**
(45) Veröffentlichungstag und Bekanntmachung des Hinweises auf die Patenterteilung: **09.08.2023**
(21) Anmeldenummer: 20735127.1
(22) Anmeldetag: 24.06.2020
(51) Int. Cl.: F16D 51/00

(54) **TROMMELBREMSE FÜR EIN KRAFTFAHRZEUG**
DRUM BRAKE FOR VEHICLE
FREIN À TAMBOUR POUR VÉHICULE

(30) Priorität: 28.06.2019 DE 102019209518
(43) Veröffentlichungstag der Anmeldung: 04.05.2022
(73) Patentinhaber: Continental Automotive Technologies GmbH, 30165 Hannover (DE)
(72) Erfinder: VOLZ, Christian, 60488 Frankfurt am Main (DE); TESKE, André, 60488 Frankfurt am Main (DE); HEINZ, Stefan, 60488 Frankfurt am Main (DE)
(74) Vertreter: Continental Corporation
(86) Internationale Anmeldenummer: PCT/EP2020/067641
(87) Internationale Veröffentlichungsnummer: WO 2020/260360

(56) Entgegenhaltungen:
- JP-U- S5 934 129
- US-A- 1 974 565
- US-A- 1 995 691
- US-A- 2 091 865
- US-A- 3 000 472

## Beschreibung

Die Erfindung betrifft eine Trommelbremse für ein Kraftfahrzeug mit einer drehbar gelagerten Bremstrommel, mit einer radial nach innen weisenden Reibfläche, mit radial innerhalb der Reibfläche angeordneten Bremsbelägen, mit einem Aktor zur Vorspannung der Bremsbeläge gegen die Reibfläche und mit einem Ankerblech zur Halterung des Aktors, mit einer Öffnung zum Abführen von Bremsabrieb aus der Bremstrommel und mit einer Abdeckung der Bremstrommel.

Die US 1 974 565 A bezieht sich auf eine quasihermetisch geschlossen anhand besonderer Abdichtungsmittel abgedichtet vorgelegte Trommelbremse für Kraftfahrzeuge umfassend eine drehbar gelagerte Bremstrommel, mit einer radial nach innen weisenden Reibfläche, mit radial innerhalb der Reibfläche angeordneten Bremsbelägen, mit einem nicht im Einzelnen beschriebenen Aktor zur Vorspannung der Bremsbeläge gegen die Reibfläche sowie mit einer Ankerplatte, wobei die Ankerplatte gemeinsam mit den Abdichtungsmitteln die Bremstrommel quasihermetisch verschließt. Eine besonders ausgewiesene Tasche zum konzentrierten Sammeln von Bremsabrieb ist nirgendwo beschrieben. Begleitend sowie zusammenfassend vermitteln die noch bekannte US 1 995 691 A, JP S59 34129 U, US 3 000 472 A sowie US 2 091 865 A einem Fachmann bestenfalls sehr allgemeine Erkenntnisse über andersartigen, allgemeinen Technologiehintergrund ohne besondere Relevanz.

Eine gattungsgemäße Trommelbremse ist aus der WO 2018/054821 A1 bekannt. Bei dieser Trommelbremse ist an der Abdeckung unmittelbar an der Bremstrommel eine Öffnung mit horizontaler Achse angeordnet, an die eine mit einer Entstaubungseinheit versehene Saugeinrichtung angeschlossen ist. Die Saugeinrichtung hat die Aufgabe, ansammelnden Bremsstaub abzusaugen und dessen Emission in die Umgebung zu verhindern.

Nachteilig bei der bekannten Trommelbremse ist jedoch, dass die Anordnung der Öffnung mit der horizontalen Achse für die Absaugung ungünstig ist. Zudem ist bei dieser Anordnung der Öffnung die kontinuierliche Absaugung notwendig.

Der Erfindung liegt das Problem zugrunde, eine Trommelbremse der eingangs genannten Art so weiter zu bilden, dass der Bremsabrieb einfach entfernt werden kann.

Dieses Problem wird erfindungsgemäß dadurch gelöst, dass die Abdeckung eine Tasche zum Sammeln von Bremsabrieb begrenzt.

Durch diese Gestaltung ermöglicht die Tasche ein Ansammeln des Bremsabriebs. Nach einer vorgesehenen Zeit oder einem vorgesehenen Füllstand an Bremsabrieb kann dieser über die Öffnung aus der Tasche beispielsweise durch Absaugung entfernt werden. Aus der Tasche lässt sich der Bremsabrieb besonders einfach entfernen. Daher ist eine kontinuierliche Absaugung nicht zwingend erforderlich.

Die Tasche gestaltet sich gemäß einer anderen vorteilhaften Weiterbildung der Erfindung konstruktiv besonders einfach, wenn die Öffnung von dem Bodenbereich der Abdeckung beabstandet ist. Durch diese Gestaltung sammelt sich der Bremsabrieb durch die Schwerkraft unterhalb der Öffnung, so dass eine Freilegung der Öffnung nicht zu einem unbeabsichtigten Austreten von Bremsabrieb führt. Da die Öffnung vom Bodenbereich des Ankerblechs beabstandet ist, wird eine versehentliche Freisetzung von Bremsabrieb bei dessen Entfernung vermieden.

Die Abführung des Bremsabriebs gestaltet sich gemäß einer anderen vorteilhaften Weiterbildung der Erfindung besonders einfach, wenn die Öffnung in einen in die Tasche hineinragenden Auffangtrichter mündet. Der Auffangtrichter ermöglicht eine Sammlung des entstehenden Bremsabriebs. Der Bremsabrieb wird damit bei der Entstehung von der Paarung der Bremsbeläge und der Bremstrommel entfernt und in dem Auffangtrichter gesammelt. Weiterhin lässt sich mittels des Auffangtrichters lässt sich die Strömung bei der Abführung des Bremsabriebs beeinflussen.

Eine besonders zuverlässige Sammlung und Abführung des Bremsabriebs gestaltet sich gemäß einer anderen vorteilhaften Weiterbildung der Erfindung besonders einfach, wenn der Auffangtrichter zwischen zwei Bremsbelägen und unmittelbar oberhalb der Innenseite der Bremstrommel angeordnet ist und eine Muldenform zum Sammeln des Bremsabriebs hat.

Die Abmessungen der Tasche lassen sich gemäß einer anderen vorteilhaften Weiterbildung der Erfindung einfach begrenzen, wenn die Abdeckung einen vertikalen Abschnitt hat, wenn der vertikale Abschnitt einen Teilbereich der Tasche bildet und wenn die Öffnung oberhalb des vertikalen Abschnitts angeordnet ist.

Die Abdeckung gestaltet sich gemäß einer anderen vorteilhaften Weiterbildung der Erfindung konstruktiv besonders einfach, wenn das Ankerblech und die Abdeckung einstückig gefertigt sind.

Die Trommelbremse gestaltet sich gemäß einer anderen vorteilhaften Weiterbildung der Erfindung besonders kostengünstig, wenn die Öffnung von einem Stopfen verschlossen ist. Der Stopfen kann bei Inspektion entfernt und ein Saugrohr zur Absaugung des Bremsabriebs in die Tasche eingeführt werden.

Zur Vereinfachung einer kontinuierlichen oder diskontinuierlichen Entfernung des Bremsabriebs trägt es gemäß einer anderen vorteilhaften Weiterbildung der Erfindung bei, wenn die Öffnung einen Anschluss für eine Saugleitung hat. Die Saugleitung lässt sich zum Beispiel bei einer Inspektion des Kraftfahrzeuges an dem Anschluss anschließen oder zum kontinuierlichen Absaugen ständig angeschlossen halten.

Eine kontinuierliche Absaugung des Bremsabriebs gestaltet sich gemäß einer anderen vorteilhaften Weiterbildung der Erfindung besonders einfach, wenn die Öffnung mit einem Luftfilter verbunden ist.

Die Anordnung eines separat zu montierenden Sauggebläses lässt sich gemäß einer anderen vorteilhaften Weiterbildung der Erfindung vermeiden, wenn die Öffnung mit einem Ansaugtrakt einer Brennkraftmaschine verbunden ist. Durch diese Gestaltung wird der Bremsabrieb im ohnehin vorhandenen Luftfilter zurückgehalten.

Zur Vereinfachung der Absaugung des Bremsabriebs trägt es gemäß einer anderen vorteilhaften Weiterbildung der Erfindung bei, wenn die Tasche an ihrer Oberseite einen gegenüber dem vertikalen Abschnitt geneigten Abschnitt aufweist und wenn die Öffnung in dem geneigten Abschnitt angeordnet ist. Durch diese Gestaltung ist die Zugänglichkeit der Tasche von oben gewährleistet.

Die Saugleitung lässt sich gemäß einer anderen vorteilhaften Weiterbildung der Erfindung einfach dauerhaft an der Öffnung fixieren, wenn die Öffnung einen Rohrstutzen hat.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: vereinfacht einen Längsschnitt durch eine Trommelbremse,
- Fig.2: einen Teilbereich einer ersten Ausführungsform der Trommelbremse aus Figur 1,
- Fig.3: einen Sauger zum Anschluss an die Trommelbremse aus Figur 2.
- Fig.4: einen Teilbereich einer zweiten Ausführungsform der Trommelbremse aus Figur 1,
- Fig.5: einen Teilbereich einer dritten Ausführungsform der Trommelbremse aus Figur 1,
- Fig.6: eine Schnittdarstellung der Ausführungsform nach Figur 3 entlang der Linie VI - VI.

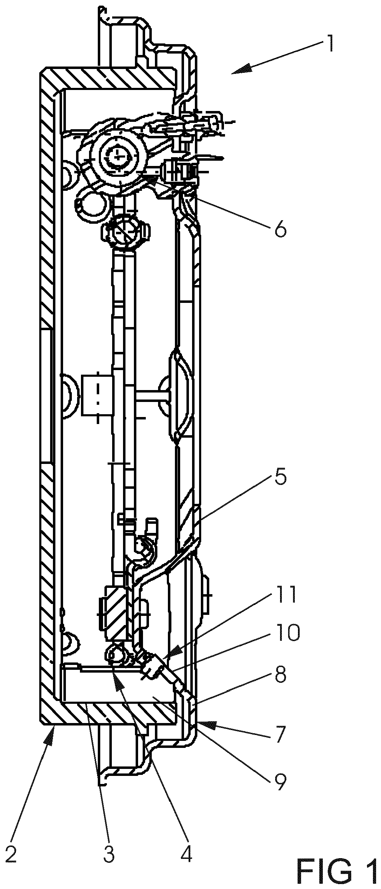

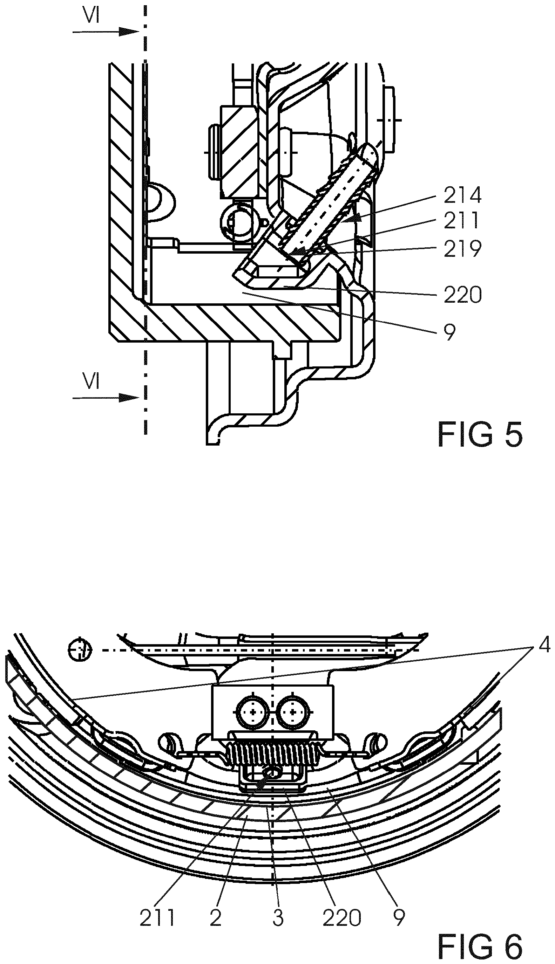

Figur 1 zeigt vereinfacht einen Längsschnitt durch eine Trommelbremse 1 eines Kraftfahrzeuges mit einer drehbar gelagerten Bremstrommel 2 und einer radial nach innen weisenden Reibfläche 3. Radial innerhalb der Reibfläche 3 stehen der Bremstrommel 2 Bremsbeläge 4 gegenüber. Die Bremsbeläge 4 sind paarweise angeordnet, wie es in der Figur 6 dargestellt ist. Die Bremsbeläge 4 sind auf einem Ankerblech 5 gehalten und lassen sich von einem Aktor 6 gegen die Reibfläche 3 pressen. Das Ankerblech 5 hat eine einen Teilbereich der Bremstrommel 2 übergreifende Abdeckung 7. Zwischen der Bremstrommel 2, und einem vertikalen Abschnitt 8 der Abdeckung 7 ist eine Tasche 9 angeordnet, in der sich Bremsabrieb ansammelt. Das Ankerblech 5 hat in einem oberhalb des vertikalen Abschnitts 8 angeordneten geneigten Abschnitt 10 eine Öffnung 11. Die im vorliegenden Ausführungsbeispiel einstückig mit dem Ankerblech 5 gefertigte Abdeckung 7 dichtet die Tasche 9 gegenüber der Umgebung ab, so dass ein Eintrag von Bremsabrieb in die Umgebung verhindert wird.

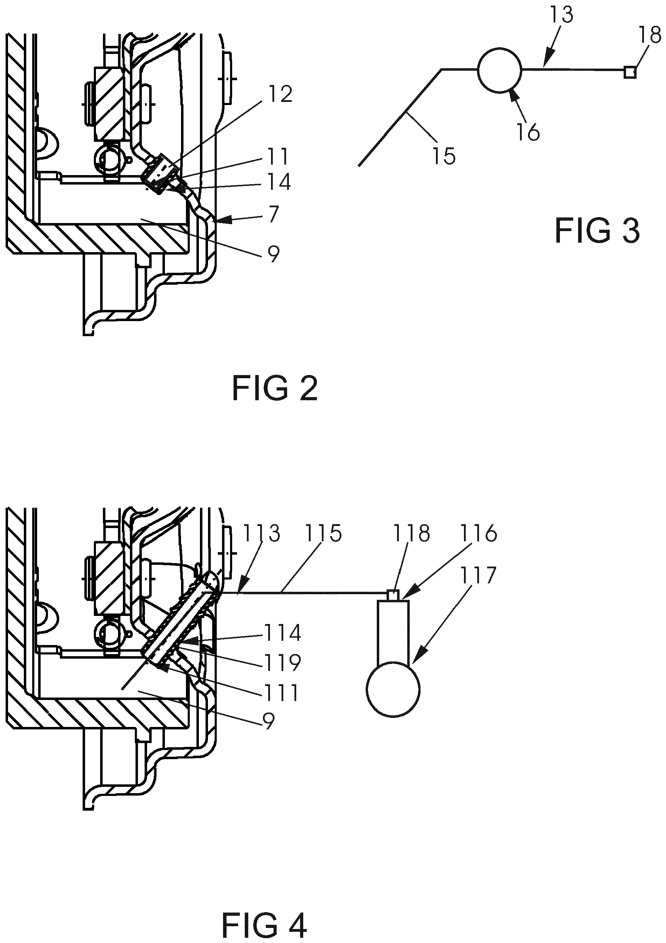

Figur 2 zeigt vergrößert den unteren Teilbereich der Trommelbremse 1 aus Figur 1 im Bereich der Öffnung 11. Die Öffnung 11 ist von einem Stopfen 12 verschlossen. Nach einer Entfernung des Stopfens 12 lässt sich ein in Figur 3 dargestellter Sauger 13 durch einen Anschluss 14 der Öffnung 11 einführen und den Bremsabrieb absaugen.

Figur 3 zeigt schematisch einen Sauger 13 zum Anschluss an die Öffnung 11 aus Figur 2. Der Sauger 13 hat eine Saugleitung 15 zum Einführen in die Öffnung 11, ein Gebläse 16 und einen Luftfilter 18. Wenn man die Saugleitung 15 in die Öffnung 11 einführt, gelangt das freie Ende der Saugleitung 15 bis in den Bodenbereich der Tasche 9. Anschließend lässt sich der Bremsabrieb mittels des Gebläses 16 absaugen und in dem Luftfilter 18 auffangen.

Figur 4 zeigt eine weitere Ausführungsform des unteren Teilbereichs der Trommelbremse 1 aus Figur 1 mit einer Öffnung 111. Die Öffnung 111 hat einen rohrförmigen Anschluss 114, auf dem ein Sauger 113 aufgesteckt ist. Der Sauger 113 führt über eine Saugleitung 115 zu einem Ansaugtrakt 116 einer Brennkraftmaschine 117 des Kraftfahrzeuges. Die Saugleitung 115 ist dabei bis in den Bodenbereich der Tasche 9 geführt. Hierdurch wird der Bremsabrieb kontinuierlich abgesaugt und in einem Luftfilter 118 der Brennkraftmaschine 117 aufgefangen. Zur dauerhaften Fixierung der Saugleitung 115 hat der Anschluss 114 einen Rohrstutzen 119. Ansonsten ist die Ausführungsform wie die aus Figur 2 gestaltet.

Figur 5 zeigt eine weitere Ausführungsform des unteren Teilbereichs der Trommelbremse 1 aus Figur 1 mit einer Öffnung 211. Wie bei der Ausführungsform nach Figur 4 hat die Öffnung 211 einen rohrförmigen Anschluss 214, für einen hier nicht dargestellten Sauger. Der rohrförmige Anschluss 214 hat einen Rohrstutzen 219. In die wie bei den zuvor beschriebenen Ausführungsformen aufgebaute Tasche 9 ragt ein Auffangtrichter 220 hinein. Der Auffangtrichter 220 ragt bis unmittelbar vor die Reibfläche 3 der Bremstrommel 2 und hat eine Muldenform zum Sammeln des Bremsabriebs.

Figur 6 zeigt eine Schnittdarstellung durch die Ausführungsform nach Figur 5 entlang der Linie VI - VI. Hierbei ist zu erkennen, dass der Auffangtrichter 220 zwischen zwei Bremsbelägen 4 angeordnet ist.

## Patentansprüche

1. Trommelbremse (1) für ein Kraftfahrzeug mit einer drehbar gelagerten Bremstrommel (2), mit einer radial nach innen weisenden Reibfläche (3), mit radial innerhalb der Reibfläche (3) angeordneten Bremsbelägen (4), mit einem Aktor (6) zur Vorspannung der Bremsbeläge (4) gegen die Reibfläche (3) und mit einem Ankerblech (5) zur Halterung des Aktors (6), mit einer Öffnung (11, 111, 211) zum Abführen von Bremsabrieb aus der Bremstrommel (2) und mit einer Abdeckung (7) der Bremstrommel (2), **dadurch gekennzeichnet, dass** die Abdeckung (7) eine Tasche (9) zum Sammeln von Bremsabrieb begrenzt.

2. Trommelbremse nach Anspruch 1, **dadurch gekennzeichnet, dass** die Öffnung (11, 111, 211) von dem Bodenbereich der Abdeckung (7) beabstandet ist.

3. Trommelbremse nach Anspruch 1 oder 2, **dadurch gekennzeichnet, dass** die Öffnung (211) in einen in die Tasche (9) hineinragenden Auffangtrichter (220) mündet.

4. Trommelbremse nach Anspruch 3, **dadurch gekennzeichnet, dass** der Auffangtrichter (220) zwischen zwei Bremsbelägen (4) und unmittelbar oberhalb der Innenseite der Bremstrommel (2) angeordnet ist und eine Muldenform zum Sammeln des Bremsabriebs hat.

5. Trommelbremse nach zumindest einem der Ansprüche 1 bis 4, **dadurch gekennzeichnet, dass** die Abdeckung (7) einen vertikalen Abschnitt (8) hat und der vertikale Abschnitt (8) einen Teilbereich hat, der die Tasche (9) bildet und dass die Öffnung (11, 111, 211) oberhalb des vertikalen Abschnitts (8) angeordnet ist.

6. Trommelbremse nach zumindest einem der Ansprüche 1 bis 5, **dadurch gekennzeichnet, dass** das Ankerblech (5) und die Abdeckung (7) einstückig gefertigt sind.

7. Trommelbremse nach zumindest einem der Ansprüche 1 bis 6, **dadurch gekennzeichnet, dass** die Öffnung (11) von einem Stopfen (12) verschlossen ist.

8. Trommelbremse nach zumindest einem der Ansprüche 1 bis 7, **dadurch gekennzeichnet, dass** die Öffnung (11, 111, 211) einen Anschluss (14, 114, 214) für eine Saugleitung (15, 115) hat.

9. Trommelbremse nach zumindest einem der Ansprüche 1 bis 8, **dadurch gekennzeichnet, dass** die Öffnung (11, 111) mit einem Luftfilter (18, 118) verbunden ist.

10. Trommelbremse nach zumindest einem der Ansprüche 1 bis 9, **dadurch gekennzeichnet, dass** die Öffnung (11, 111, 211) mit einem Ansaugtrakt (116) einer Brennkraftmaschine (117) verbunden ist.

11. Trommelbremse nach zumindest einem der Ansprüche 1 bis 10, **dadurch gekennzeichnet, dass** die Tasche (9) an ihrer Oberseite einen gegenüber dem vertikalen Abschnitt (8) geneigten Abschnitt (10) aufweist und dass die Öffnung (11, 111, 211) in dem geneigten Abschnitt (10) angeordnet ist.

12. Trommelbremse nach zumindest einem der Ansprüche 1 bis 11, **dadurch gekennzeichnet, dass** die Öffnung (111, 211) einen Rohrstutzen (119, 219) hat.

## Claims

1. Drum brake (1) for a motor vehicle having a rotatably mounted brake drum (2), having a radially inward-facing friction surface (3), having brake linings (4) arranged radially inside the friction surface (3), having an actuator (6) for preloading the brake linings (4) against the friction surface (3), and having an anchor plate (5) for holding the actuator (6), having an opening (11, 111, 211) for discharging abraded brake particles from the brake drum (2), and having a cover (7) for the brake drum (2), **characterized in that** the cover (7) delimits a pocket (9) for collecting abraded brake particles.

2. Drum brake according to Claim 1, **characterized in that** the opening (11, 111, 211) is spaced apart from the base region of the cover (7).

3. Drum brake according to Claim 1 or 2, **characterized in that** the opening (211) opens into a collecting funnel (220) projecting into the pocket (9).

4. Drum brake according to Claim 3, **characterized in that** the collecting funnel (220) is arranged between two brake linings (4) and directly above the inner side of the brake drum (2) and has a trough shape for collecting the abraded brake particles.

5. Drum brake according to at least one of Claims 1 to 4, **characterized in that** the cover (7) has a vertical section (8), and the vertical section (8) has a partial region which forms the pocket (9), and **in that** the opening (11, 111, 211) is arranged above the vertical section (8).

6. Drum brake according to at least one of Claims 1 to 5, **characterized in that** the anchor plate (5) and the cover (7) are manufactured in one piece.

7. Drum brake according to at least one of Claims 1 to 6, **characterized in that** the opening (11) is closed by a plug (12).

8. Drum brake according to at least one of Claims 1 to 7, **characterized in that** the opening (11, 111, 211) has a connection (14, 114, 214) for a suction line (15, 115).

9. Drum brake according to at least one of Claims 1 to 8, **characterized in that** the opening (11, 111) is connected to an air filter (18, 118).

10. Drum brake according to at least one of Claims 1 to 9, **characterized in that** the opening (11, 111, 211) is connected to an intake tract (116) of an internal combustion engine (117).

11. Drum brake according to at least one of Claims 1 to 10, **characterized in that** the pocket (9) has on its upper side a section (10) which slopes relative to the vertical section (8), and **in that** the opening (11, 111, 211) is arranged in the sloping section (10).

12. Drum brake according to at least one of Claims 1 to 11, **characterized in that** the opening (111, 211) has a tubular nozzle (119, 219).

## Revendications

1. Frein à tambour (1) pour un véhicule automobile, avec un tambour de frein (2) monté de manière rotative, avec une surface de friction (3) orientée radialement vers l'intérieur, avec des garnitures de frein (4) agencées radialement à l'intérieur de la surface de friction (3), avec un actionneur (6) pour précontraindre les garnitures de frein (4) contre la surface de friction (3) et avec une tôle d'ancrage (5) pour maintenir l'actionneur (6), avec une ouverture (11, 111, 211) pour évacuer l'usure de freinage du tambour de frein (2) et avec un couvercle (7) du tambour de frein (2), **caractérisé en ce que** le couvercle (7) délimite une poche (9) pour collecter l'usure de freinage.

2. Frein à tambour selon la revendication 1, **caractérisé en ce que** l'ouverture (11, 111, 211) est espacée de la zone de fond du couvercle (7).

3. Frein à tambour selon la revendication 1 ou 2, **caractérisé en ce que** l'ouverture (211) débouche dans un entonnoir de capture (220) qui s'étend dans la poche (9).

4. Frein à tambour selon la revendication 3, **caractérisé en ce que** l'entonnoir de capture (220) est agencé entre deux garnitures de frein (4) et juste au-dessus du côté intérieur du tambour de frein (2) et a une forme de cuvette pour collecter l'usure de freinage.

5. Frein à tambour selon au moins l'une quelconque des revendications 1 à 4, **caractérisé en ce que** le couvercle (7) a une section verticale (8) et la section verticale (8) a une zone partielle qui forme la poche (9) et **en ce que** l'ouverture (11, 111, 211) est agencée au-dessus de la section verticale (8).

6. Frein à tambour selon au moins l'une quelconque des revendications 1 à 5, **caractérisé en ce que** la tôle d'ancrage (5) et le couvercle (7) sont fabriqués en une seule pièce.

7. Frein à tambour selon au moins l'une quelconque des revendications 1 à 6, **caractérisé en ce que** l'ouverture (11) est fermée par un bouchon (12).

8. Frein à tambour selon au moins l'une quelconque des revendications 1 à 7, **caractérisé en ce que** l'ouverture (11, 111, 211) a un raccord (14, 114, 214) pour une conduite d'aspiration (15, 115).

9. Frein à tambour selon au moins l'une quelconque des revendications 1 à 8, **caractérisé en ce que** l'ouverture (11, 111) est reliée à un filtre à air (18, 118).

10. Frein à tambour selon au moins l'une quelconque des revendications 1 à 9, **caractérisé en ce que** l'ouverture (11, 111, 211) est reliée à un conduit d'aspiration (116) d'un moteur à combustion interne (117).

11. Frein à tambour selon au moins l'une quelconque des revendications 1 à 10, **caractérisé en ce que** la poche (9) présente sur son côté supérieur une section (10) inclinée par rapport à la section verticale (8) et **en ce que** l'ouverture (11, 111, 211) est agencée dans la section inclinée (10).

12. Frein à tambour selon au moins l'une quelconque des revendications 1 à 11, **caractérisé en ce que** l'ouverture (111, 211) a un embout de tuyau (119, 219).
